# EUROPÄISCHE PATENTSCHRIFT

(11) **EP 3 831 593 B1**
(45) Veröffentlichungstag und Bekanntmachung des Hinweises auf die Patenterteilung: **08.07.2026**
(21) Anmeldenummer: 19214176.0
(22) Anmeldetag: 06.12.2019
(51) Int. Cl.: B32B 27/32, B65D 75/58, B65D 77/20, B65D 5/56

(54) **VERFAHREN ZUM HERSTELLEN VON VERPACKUNGEN AUS EINEM FLACHMATERIAL AUS KARTON UND EINER BARRIEREFOLIE**
METHOD FOR PRODUCING PACKAGING FROM A FLAT MATERIAL CONSISTING OF CARDBOARD AND A BARRIER FILM
PROCÉDÉ DE FABRICATION D'EMBALLAGES À PARTIR D'UNE MATIÈRE PLATE DE CARTON ET D'UN FEUILLE BARRIÈRE

(43) Veröffentlichungstag der Anmeldung: 09.06.2021
(73) Patentinhaber: GPI Frankfurt & Augsburg GmbH, 65830 Kriftel (DE)
(72) Erfinder: MACK, Ralf, 86343 Königsbrunn (DE)
(74) Vertreter: Hauck Patent- und Rechtsanwälte PartmbB

(56) Entgegenhaltungen:
- EP-A1- 2 540 492
- EP-A1- 2 965 997
- EP-A2- 3 604 154
- WO-A1-01/23272
- WO-A1-2011/127916
- DE-A1- 102018 126 879
- DE-A1- 4 328 016
- US-A- 4 337 862
- US-A1- 2019 077 125
- DATABASE WPI Week 198944, Derwent World Patents Index; AN 1989-321339, XP002799364
- DATABASE WPI Week 200422, Derwent World Patents Index; AN 2004-230749, XP002799365
- DATABASE WPI Week 201334, Derwent World Patents Index; AN 2013-G05311, XP002799366
- DATABASE WPI Week 200162, Derwent World Patents Index; AN 2001-553473, XP002799367
- DATABASE WPI Week 200001, Derwent World Patents Index; AN 2000-007113, XP002799368
- DATABASE WPI Week 199923, Derwent World Patents Index; AN 1999-266919, XP002799369
- DATABASE WPI Week 198741, Derwent World Patents Index; AN 1987-287424, XP002799370

## Beschreibung

Die Erfindung betrifft ein Verfahren zum Herstellen von Verpackungen aus einem Flachmaterial aus Karton und einer Barrierefolie.

Schalen, Teller, Becher und andere Behälter mit einer Barrierefolie oder anderer Barriereschicht für Gas, Wasserdampf, Aroma oder Fett zur Aufbewahrung von Lebensmitteln sind bekannt. Sie werden beispielsweise beim Modified Atmosphere Packaging (MAP) verwendet, bei dem Lebensmittel unter Stickstoff, Kohlendioxid oder einem anderen Schutzgas verpackt werden, um die Haltbarkeit des Lebensmittels in der ungeöffneten Verpackung zu erhöhen. Bei anderen Anwendungen solcher Behälter werden die Lebensmittel zur Verbesserung der Haltbarkeit unter Vakuum verpackt. Bei beiden Verpackungsweisen ist neben einer Gasdichtigkeit eine Feuchtigkeitsbarriere erwünscht, um Feuchtigkeitsverlust des Lebensmittels zu vermeiden.

Die WO 02/085720 A2 beschreibt ein Tray für eine Verpackung mit umlaufendem Randflansch, welches innenseitig mit einer den Randflansch erfassenden Kunststofffolie, insbesondere Kunststoffverbundfolie, ausgekleidet ist. Ein vorgefertigter Zuschnitt aus Karton bildet den Verpackungsboden, die Seitenwände und den Randflansch. Die Kunststoffverbundfolie kann eine Sauerstoffsperrschicht und eine Siegelschicht sowie eine Haftschicht dazwischen aufweisen. Die Zuschnitte werden in Stapeln gelagert und transportiert und vor dem Auskleiden mit der Kunststofffolie zu einer Faltschachtel aufgerichtet. Bei der Herstellung wird zunächst der Zuschnitt zu einem Tray aufgerichtet. Dann wird das Tray mit Kunststoffverbundfolie ausgekleidet. Hierfür werden das Tray und die Verbundfolie in eine Formstation eingebracht und die Verbundfolie nach Erwärmen mittels Vakuum an die Innenseite des Trays angesaugt. Hierdurch wird eine vollständige Wärmekaschierung zwischen der Kunststoffverbundfolie und den Tray-Innenseiten bewirkt und gleichzeitig die durchgehenden Randflansche vollständig wärmekaschiert.

Nachteilig ist, dass die aneinandergrenzenden Ränder verschiedener Abschnitte des Flansches einander überlappen. Hierdurch wird das gasdichte Abdichten des Trays durch nachträgliches Aufsiegeln einer Abdeckfolie auf den Flansch erschwert.

Die EP 2 441 697 B1 beschreibt ein Verfahren zum Herstellen einer MAP-Verpackung, bei dem auf eine Faltschachtel eine Kunststofffolie auflaminiert und hierdurch die Faltschachtel in Form gehalten wird. Überlappende und miteinander verklebte Teile der Faltschachtel werden hierdurch vermieden. Die Faltschachtel ist mit Sauglöchern versehen, um das Laminieren der Kunststofffolie auf die Innenseite der Faltschachtel durch Anlegen eines Unterdruckes an deren Außenseite besser steuern zu können.

Die Herstellungsgeschwindigkeit wird durch die Notwendigkeit der präzisen Ausrichtung des aufgerichteten Zuschnittes begrenzt. Zudem können die Saugöffnungen das optische Erscheinungsbild der Faltschachtel stören.

Die EP 2 679 510 B1 beschreibt einen doppelwandigen Behälter mit einer Außenwand und einer Innenhülle, die jeweils einen Boden und eine Seitenwand umfassen. Die Innenhülle ist eine Kunststofffolie mit einer thermoadhäsiven Seite, deren Seitenwand durch eine Adhäsionszone mit der Seitenwand der Außenwand fest verbunden ist. In der Adhäsionszone nimmt die Adhäsionskraft in Richtung auf den Boden des Behälters ab, um das Trennen der Innenhülle von der Außenwand zu erleichtern. Die Adhäsionseigenschaften sollen durch Spezifizieren der Eigenschaften der thermoadhäsiven Beschichtung in Abhängigkeit von der Position auf der Außenwand variiert werden. Als weitere Möglichkeit ist ein thermoplastischer Film angegeben, der zumindest zwei verschiedene Klebebeschichtungen aufweist, um zumindest zwei Adhäsionszonen mit unterschiedlichen Eigenschaften zu bilden. Ferner soll die Adhäsionskraft durch unterschiedliches lokales Dehnen der Folie und Verteilen der thermoadhäsiven Beschichtung gesteuert werden. Schließlich soll es möglich sein, die Adhäsionskraft durch Thermoformen mit einem Temperaturgradienten entlang des Behälters zu steuern. Die beschriebenen Einstellungsweisen der Adhäsionskraft sind schwer umsetzbar und beeinflussen teilweise die Adhäsionskraft nur geringfügig.

Die EP 2 687 360 B1 beschreibt eine Faltschachtel mit einem umlaufenden Flansch. Eine Folie wird im Zentralbereich erhitzt und auf die Faltschachtel auflaminiert, sodass sie auf dem Flansch lose aufliegt. Hierdurch soll das Abtrennen überstehender Folie erleichtert und das Eintreten der Folie in Spalte zwischen benachbarten Flanschteilen vermieden werden, um das Abdichten durch Aufsiegeln einer Abdeckfolie zu erleichtern.

Die EP 3 130 548 B1 beschreibt die Herstellung eines Trays oder eines anderen Objektes mit einem Flansch aus einem Zuschnitt und einer aufkaschierten Kunststofffolie. An einer den Flansch begrenzenden Faltlinie soll mindestens ein U-förmiger Schnitt in das Material eingebracht werden, dessen freie Enden in die Faltlinie fallen und dessen Überbrückungsteil im Flansch angeordnet ist. Hierdurch soll eine Lippe in der Wand und ein Rezess im Flanschteil erzeugt werden. Beim Erkalten der auflaminierten Kunststofffolie soll die schrumpfende Folie die Lippe in den Rezess ziehen und den Flansch stabilisieren.

Die EP 2 965 997 A1 beschreibt die Auskleidung einer Faltschachtel mit einem Randflansch mit einer Folie. Das Abziehen der Folie von der Faltschachtel wird dadurch erleichtert, dass diese einen Griff aufweist. Dieser kann durch eine überstehende Lasche oder einen Bereich oberhalb eines Loches in dem Randflansch der Faltschachtel gebildet sein.

Die WO 2017/158239 A1 beschreibt eine entfernbare Auskleidung einer Faltschachtel. Die Seitenwände der Faltschachtel sind zur Basis hin zurückgefaltet, sodass die Schnittkante der Seitenwände auf der Innenseite liegt. Die Auskleidung wird am oberen Rand der Seitenwände befestigt, insbesondere auf der Faltlinie. Die Auskleidung steht über den oberen Rand seitlich über und daran ist eine Abdeckung befestigt, insbesondere durch Wärmesiegeln.

Die WO 2017/158233 A1 beansprucht in Abweichung von der zuvor erwähnten Schrift, dass die auf dem oberen Rand der Seitenwände befestigte Auskleidung außen übersteht. Ferner sind die äußeren Abschnitte der Seitenwände nach außen gefaltet oder nur einlagig.

Die WO 2018/178508 A1 beschreibt eine Faltschachtel mit einem im Wesentlichen flachen, ununterbrochenen Flansch und einer heraustrennbaren Auskleidung, wobei eine flüssigkeitsdichte Verbindung an den Ecken durch ein unter dem Ecksaum und den Enden der Randabschnitte des Flansches befestigtes Verstärkungsstück verstärkt ist.

Die EP 3 604 154 A2 beschreibt eine Verpackungsschale aus einem Zuschnitt mit einem Boden und daran angeordneten Seitenwänden aus Karton, Pappe, Papier oder dergleichen und wenigstens einer auf der Kartonoberseite angeordneten Kunststofffolie. Die Kunststofffolie ist der Form der Verpackungsschale angepasst und entspricht dieser Form. Zwischen dem Karton und dem Kunststoff ist eine PeelSchicht vorgesehen, wodurch sich Kunststoff und Karton sehr gut trennen lassen.

Die JP H01 240457 A (Database WPI Week 198944, Thomson Scientific, London, GB, AN 1989-321339, XP002799364, & JP H01 240457 A Dainippon Printing Co. Ltd., 26. September 1989 1989-09-26) beschreibt eine laminierte Folie, die durch ein Pergamentpapier und eine darauf mittels einer Polyethylen-Harzschicht auflaminierte Aluminiumfolie gebildet ist. Die laminierte Folie entspricht einer Siegelschicht. Auf der Aluminiumfolie wird eine abtrennbare Harzschicht gebildet und in die laminierte Folie werden Lochperforationen eingebracht. Auf der abtrennbaren Harzschicht wird eine extrudierte Beschichtungsschicht aus Polyethylenharz gebildet und eine Pappe wird mittels einer Wachsschicht auf die Beschichtungsschicht auflaminiert. Hierdurch wird eine Laminierung erhalten, die aus der laminierten Folie der Siegelschicht und der darauf mittels der abtrennbaren Harzschicht auflaminierten Siegelschicht aus Pappe, Wachsschicht und bestehend aus der Pappe, der Wachsschicht und der Harzschicht gebildet ist.

Die WO 01/23272 A1 beschreibt eine Skin-Verpackung aus einem Karton und einer Haut aus einer im Wesentlichen transparenten Folie, die den Artikel auf dem Karton befestigt und mittels eines Klebstoffs mit dem Karton verbunden ist. Der Klebstoff wird durch Wärme aktiviert und hat die Funktion, die Folie beim Abziehen von der Platte zu lösen, ohne dass es im Wesentlichen zu einer gegenseitigen Kontamination kommt.

Die DE 10 2018 126 879 A1 beschreibt eine Verpackungsschale aus einem Zuschnitt mit einem Boden und daran angeordneten Seitenwänden aus Karton, Pappe, Papier oder dergleichen und wenigstens einer darauf auf der Kartonoberseite angeordneten Kunststofffolie. Die Kunststofffolie ist der Form der Verpackungsschale angepasst und entspricht dieser Form. Die Kartonverpackung und die Kunststofffolie sind miteinander ablösbar verbunden, und zwar durch Kleben, Adhäsion oder Siegeln.

Die WO 2011/127916 A1 beschreibt ein Laminat mit Soll-Bruchstelle mit verringerter Risspropagation. Das Laminat umfasst eine Topschicht mit einem blattförmigen Material niedriger Reißfestigkeit, eine blattförmige Basisschicht aus einem Polymer höherer Reißfestigkeit als die Topschicht und eine Adhäsionsschicht zwischen der Topschicht und der Basisschicht. Die Adhäsionsschicht peelt gegen die Topschicht und/oder die Basisschicht, wenn die Schicht mit niedriger Reißfestigkeit wegen Überschreitung der Reißgrenze reißt.

Davon ausgehend liegt der Erfindung die Aufgabe zugrunde, ein Verfahren für eine Vorrichtung zum Herstellen von Verpackungen aus einem Flachmaterial aus Karton, Pappe oder Papier mit einer Barrierefolie zu schaffen, wobei die Barrierefolie einfacher gezielt von dem Flachmaterial getrennt werden kann und die Verpackung besser recycelbar ist.

Die Aufgabe wird durch ein Verfahren mit den Merkmalen von Anspruch 1 gelöst. Vorteilhafte Ausführungsarten des Verfahrens sind in Unteransprüchen angegeben.

Bei dem Verfahren zum Herstellen von Verpackungen aus einem Flachmaterial aus Karton, Pappe, Wellpappe oder Papier und einer Barrierefolie wird das Flachmaterial auf mindestens einer Seite mit einer die Adhäsionswirkung der Barrierefolie beeinflussenden Beschichtung bedruckt, aus dem mit der Beschichtung bedruckten Flachmaterial mindestens ein Zuschnitt zum Bilden einer Verpackung hergestellt und auf die mit der Beschichtung versehene Seite des Flachmaterials die Barrierefolie auflaminiert, wobei die Beschichtung in Form einer Vielzahl von Rasterpunkten aufgebracht wird.

Bei dem erfindungsgemäßen Verfahren wird die Adhäsionswirkung zwischen dem Flachmaterial und der Barrierefolie durch die Beschichtung (Steuerschicht) gesteuert.

Mittels der Beschichtung kann die Adhäsionswirkung so eingestellt werden, dass die Barrierefolie hinreichend sicher an dem Flachmaterial fixiert ist, um ein Produkt in der Verpackung zu lagern, zu transportieren, zu erwärmen, aus der Verpackung zu entnehmen, z.B. ein Nahrungsmittelprodukt daraus zu essen. Gleichzeitig kann mittels der Beschichtung die Adhäsionswirkung so eingestellt werden, dass die Barrierefolie leicht gezielt von dem Flachmaterial abgelöst werden kann, um die Barrierefolie und das Flachmaterial getrennt voneinander zu rezyklieren. Durch die Beschichtung kann die Adhäsionswirkung einer Barrierefolie mit bestimmten Eigenschaften (Material, Dicke usw.) an dem Flachmaterial besonders einfach, genau und in einem besonders großen Bereich eingestellt werden. Die Beeinflussung der Adhäsionswirkung durch die Beschichtung besteht gemäß einer Ausführungsart der Erfindung in einer Abschwächung der Adhäsionswirkung gegenüber der Adhäsionswirkung der Barrierefolie an dem Flachmaterial ohne die Beschichtung. Gemäß einer anderen Ausführungsart besteht die Beeinflussung der Adhäsionswirkung durch die Beschichtung in einer Verstärkung der Adhäsionswirkung gegenüber der Adhäsionswirkung der Barrierefolie an dem Flachmaterial ohne die Beschichtung. Hierdurch kann ein Material als Barrierefolie nutzbar gemacht werden, das ohne Beschichtung keine oder eine nur unzureichende Adhäsionswirkung an dem Flachmaterial hätte. Die Steuerung der Adhäsionswirkung kann insbesondere dadurch erfolgen, dass die Beschichtung mit einer unterschiedlichen Schichtstärke erfolgt und/oder die Beschichtung in einem Raster mit einer einstellbaren Punktedichte und/oder die Beschichtung nur von Teilflächen des Flachmaterials erfolgt. Von Vorteil ist zudem, dass das Flachmaterial im Druckprozess einfach mit der Beschichtung versehen wird, indem die Beschichtung auf das Flachmaterial aufgedruckt wird. Durch Aufdrucken kann eine besonders einfache und genaue Beschichtung erreicht werden.

Gemäß einer weiteren Ausführungsart des Verfahrens ist das Flachmaterial ein bahnförmiges oder ein bogenförmiges Flachmaterial. Das Aufdrucken der Beschichtung kann im Rotationsdruck auf bahnförmiges Flachmaterial oder im Bogendruck auf bogenförmiges Flachmaterial erfolgen.

Gemäß einer weiteren Ausführungsart ist die Beschichtung ein Silikonöl oder ein anderes silikonhaltiges Material, ein Wachs, ein Fett oder ein anderes Trennmittel oder umfasst eine der vorerwähnten Stoffe oder Stoffzusammensetzungen.

Gemäß einer weiteren Ausführungsart wird die Beschichtung in einem Muster aufgebracht, das beschichtete Bereiche und unbeschichtete Bereiche und/oder eine stärkere Adhäsionswirkung der Barrierefolie an dem Flachmaterial bewirkende beschichtete Bereiche und demgegenüber eine schwächere Adhäsionswirkung der Barrierefolie an dem Flachmaterial bewirkende beschichtete Bereiche aufweist. Durch die jeweilige Ausbildung des Musters kann die Adhäsionswirkung der Barrierefolie an dem Flachmaterial einfach gesteuert werden. Die Beschichtung wird beispielsweise in einem Wabenmuster aufgedruckt. Dabei wird die Beschichtung streifenförmig entlang der sechs Seiten von Waben aufgedruckt. Die Beschichtung wird in einem Punkteraster umfassend eine Vielzahl Rasterpunkte aufgetragen. Die Rasterpunkte sind beispielsweise kreisförmig. Zur Beeinflussung der Adhäsionswirkung können die Abstände der Zentren benachbarter Rasterpunkte, die Größe der Rasterpunkte und/oder die Flächendichte der Rasterpunkte variiert werden.

Gemäß einer weiteren Ausführungsart bestehen die eine stärkere Adhäsionswirkung der Barrierefolie bewirkenden Bereiche der Beschichtung aus einem anderen Material und/oder weisen eine andere Schichtdicke auf, als die eine schwächere Adhäsionswirkung der Barrierefolie an dem Flachmaterial bewirkenden Bereiche der Beschichtung.

Gemäß einer weiteren Ausführungsart wird das Flachmaterial auf mindestens einer Seite mit mindestens einer Druckfarbe und/oder mindestens einem Lack bedruckt. Gemäß einer bevorzugten Ausführungsart bildet die aufgedruckte Druckfarbe und/oder der aufgedruckte Lack die Beschichtung. Gemäß einer weiteren Ausführungsart wird durch die aufgedruckte Druckfarbe und/oder den aufgedruckten Lack eine Herstellerangabe, eine Marke oder eine Produktinformation dargestellt oder das Flachmaterial mit einem grafischen oder farbigen Design versehen oder eine beliebige Kombination der vorgenannten Bearbeitungen durchgeführt. Gemäß einer weiteren Ausführungsart bildet der aufgedruckte Lack einen Schutz oder bewirkt einen Glanz oder einen Spiegel- oder einen anderen optischen Effekt oder eine beliebige Kombination der vorgenannten Effekte. Ferner kann der Lack der Darstellung einer Marke, Herstellerangabe, Produktinformation usw. mit einem Glanz-, Spiegel- oder einem anderen optischen Effekt dienen. Gemäß einer weiteren Ausführungsart ist die aufgedruckte Druckfarbe und/oder der aufgedruckte Lack die Beschichtung, welche die Adhäsionswirkung der Barrierefolie beeinflusst, und hat zugleich eine der weiteren genannten Funktionen, beispielsweise der Darstellung einer Information oder der Gestaltung des Designs des Flachmaterials. Gemäß einer weiteren Ausführungsart dient die aufgedruckte Druckfarbe und/oder der aufgedruckte Lack auf mindestens einer Seite oder auf einem Teil mindestens einer Seite des Flachmaterials als Beschichtung, welche die Adhäsionswirkung der Barrierefolie beeinflusst, und auf einer anderen Seite oder einem anderen Teil derselben Seite eine andere Funktion, beispielsweise der Darstellung einer Information oder der Gestaltung des Designs des Flachmaterials.

Gemäß einer weiteren Ausführungsart wird die Druckfarbe und/oder unter der Lack durch Flexodruck, Rotationstiefdruck, Siebdruck, Offsetdruck oder Digitaldruck aufgedruckt. Gemäß einer bevorzugten Ausführungsart wird die Druckfarbe durch Offsetdruck und/oder wird der Lack durch Flexodruck aufgedruckt. Flexodruck ist insbesondere von Vorteil, um größere Schichtdicken zu erreichen, beispielsweise um eine Schutzschicht aus Lack zu erzeugen.

Gemäß einer weiteren Ausführungsart erfolgt das Aufdrucken der Druckfarbe mittels eines Druckwerkes und/oder das Aufdrucken des Lackes mittels eines Lackierwerkes.

Barrierefolien im Sinne der vorliegenden Anmeldung bezeichnen beliebige ein- oder mehrlagige Folien aus Kunststoff und/oder Metall, die die Eigenschaft haben, den Durchgang eines oder mehrerer der Medien Gas, Wasserdampf, Aroma, Fett oder Flüssigkeit zeitweilig oder dauerhaft einzuschränken oder zu verhindern. Insbesondere sind von dem Begriff Barrierefolie Folien umfasst, die beim MAP für Lebensmittel verwendet werden.

Gemäß einer weiteren Ausführungsart umfasst die Barrierefolie mindestens eine Lage aus einem der nachfolgenden Materialien: PET, PLA, EVOH, PA, PPT, PP, PE. Gemäß einer weiteren Ausführungsart ist die Barrierefolie aus mindestens einem Biopolymer hergestellt. Hierbei handelt es sich um einen nachwachsenden Rohstoff und/oder um einen kompostierbaren Rohstoff.

Gemäß einer weiteren Ausführungsart wird die Barrierefolie erwärmt und unter erhöhter Temperatur an den Zuschnitt angepresst. Hierdurch kann eine plastische Verformung der Barrierefolie und Anpassung an die Oberfläche des Zuschnittes erreicht werden.

Gemäß einer weiteren Ausführungsart wird die Barrierefolie auf den Zuschnitt aufgesiegelt. Das Aufsiegeln kann durch Anwendung von Temperatur und Druck auf die Barrierefolie erfolgen. Zum Aufsiegeln kann die Barrierefolie einen Klebstoff umfassen, der durch Druck und Wärme (Heißsiegeln) oder mit kalten Werkzeugen (Kaltsiegeln) unter Druck aktiviert wird.

Gemäß einer weiteren Ausführungsart wird eine Adhäsionswirkung der Barrierefolie, die aus einem thermoplastischen Material besteht oder zumindest auf einer Seite eine Lage aus einem thermoplastischen Material aufweist, durch Erwärmen und Plastifizieren des thermoplastischen Materials sowie Abkühlen in Kontakt mit dem Zuschnitt erzeugt.

Gemäß einer weiteren Ausführungsart wird auf die Barrierefolie, bevor diese auf den Zuschnitt aufgebracht wird, ein chemisch härtender oder physikalisch abbindender Klebstoff aufgebracht. Durch Aushärten oder Abbinden des Klebstoffes wird die auf den Zuschnitt aufgebrachte Barrierefolie mit diesem verbunden.

Gemäß einer weiteren Ausführungsart wird der Zuschnitt durch mindestens einen der nachfolgenden Bearbeitungsschritte aus dem Flachmaterial hergestellt: Prägen, Ritzen, Rillen, Schneiden, Stanzen.

Gemäß einer weiteren Ausführungsart wird die Barrierefolie auf den Zuschnitt auflaminiert und der Zuschnitt mit der auflaminierten Barrierefolie aufgerichtet und/oder umgeformt. Hierbei wird das Auflaminieren dadurch erleichtert, dass dieses auf den flachliegenden Zuschnitt erfolgen kann. Erst nach dem Auflaminieren der Barrierefolie wird der Zuschnitt aufgerichtet und/oder umgeformt, um die Verpackung zu bilden.

Gemäß einer anderen Ausführungsart wird der Zuschnitt aufgerichtet und/oder umgeformt und wird auf den aufgerichteten und/oder umgeformten Zuschnitt die Barrierefolie auflaminiert. Durch das Auflaminieren der Barrierefolie auf den aufgerichteten und/oder umgeformten Zuschnitt kann dieser in seiner aufgerichteten und/oder umgeformten Form stabilisiert werden.

Gemäß einer anderen Ausführungsart wird gleichzeitig die Barrierefolie auf den Zuschnitt auflaminiert und der Zuschnitt aufgerichtet und/oder umgeformt. Gemäß einer weiteren Ausführungsart wird gleichzeitig die Barrierefolie auf den Zuschnitt auflaminiert und der Zuschnitt umgeformt, wobei ein Presswerkzeug gleichzeitig die Barrierefolie gegen den Zuschnitt pressen und den Zuschnitt umformen kann. Auf diese Weise kann beispielsweise eine flache Schale für Aufschnitt hergestellt werden.

Gemäß einer weiteren Ausführungsart wird die Barrierefolie auf die Innenseite des Zuschnittes auflaminiert. Bei der Innenseite handelt es sich um die Seite des Zuschnittes, die mit dem Produkt in Kontakt kommt, das von der Verpackung aufgenommen werden soll. Durch die Barrierefolie wird ein Kontakt des Produktes mit dem Flachmaterial verhindert. Gemäß einer anderen Ausführungsart wird die Barrierefolie auf die Außenseite des Zuschnittes aufgebracht, beispielsweise um zu verhindern, dass Feuchtigkeit von der Außenseite des Produktes hindurch in die Verpackung hineingelangt und das Produkt schädigt. Gemäß einer weiteren Ausführungsart wird die Barrierefolie sowohl auf die Innenseite als auch auf die Außenseite des Zuschnittes auflaminiert.

Gemäß einer weiteren Ausführungsart ist die Verpackung eine Schale (z.B. eine Schale für Aufschnitt (z.B. Käse oder Wurst), eine Schale für (unter Schutzatmosphäre verpacktes) Frischfleisch, eine Schale für Fertiggerichte (Menüschale) oder Suppen, eine Schale für Obst oder Gemüse, eine Haubenschale (d.h. eine Schale mit einer Haube zum Verschließen der Schale, z.B. für Burger)), eine Tasse, ein Becher oder ein Teller.

Gemäß einer weiteren Ausführungsart wird die Verpackung mit einer ersten Angriffsstelle an einem Rand hergestellt, wobei die Barrierefolie an der ersten Angriffsstelle eine weniger starke Verbindung zum Flachmaterial als an anderen Bereichen des Randes aufweist, sodass die Barrierefolie ausgehend von der ersten Angriffsstelle leichter als von den übrigen Bereichen des Randes von dem Flachmaterial abgezogen werden kann. Durch die erste Angriffsstelle wird das Ablösen der Barrierefolie von dem Flachmaterial erleichtert.

Gemäß einer weiteren Ausführungsart wird die erste Angriffstelle so hergestellt, dass die Barrierefolie an der ersten Angriffsstelle auf beiden Seiten nicht von dem Flachmaterial bedeckt ist. Hierdurch kann die Barrierefolie leichter an der ersten Angriffsstelle gegriffen und vom Flachmaterial abgezogen werden.

Gemäß einer weiteren Ausführungsart ist die Beschichtung so ausgebildet, dass die Adhäsionswirkung zwischen Barrierefolie und Flachmaterial mit zunehmendem Abstand von der ersten Angriffsstelle ansteigt oder abfällt. Hierdurch wird ein ungewolltes Ablösen der Barrierefolie vom Flachmaterial verhindert.

Gemäß einer weiteren Ausführungsart ist die Beschichtung so ausgebildet, dass die Adhäsionswirkung von der ersten Angriffsstelle bis zu einem Boden und/oder bis zum Zentrum der Verpackung ansteigt oder abfällt.

Gemäß einer weiteren Ausführungsart wird auf dem umlaufenden Rand der mit der Barrierefolie versehenen Seite der Verpackung eine Abdeckfolie (Siegelfolie) aufgesiegelt oder aufgeklebt. Das Aufsiegeln oder Aufkleben kann beispielsweise dadurch erfolgen, dass die Abdeckfolie und die Barrierefolie unter Anwendung von Druck und Temperatur lösbar miteinander verschmolzen werden. Ferner kann es dadurch erfolgen, dass Abdeckfolie und Barrierefolie durch Anwendung eines Siegellackes oder Klebstoffes lösbar miteinander verbunden werden.

Gemäß einer weiteren Ausführungsart ist an dem Rand der Verpackung die Adhäsionskraft der Barrierefolie an dem Flachmaterial größer als die Adhäsionshaft der Abdeckfolie an der Barrierefolie. Hierdurch kann verhindert werden, dass sich bereits beim Ablösen der Abdeckfolie von der Barrierefolie die Barrierefolie von dem Flachmaterial löst. Somit kann die Barrierefolie bis zur Entnahme des Produktes aus der Verpackung an dem Flachmaterial verbleiben und erst danach von diesem abgelöst werden.

Gemäß einer weiteren Ausführungsart wird die Abdeckfolie mit einer zweiten Angriffsstelle am Rand der Verpackung hergestellt. Hierdurch wird das gezielte Abtrennen der Abdeckfolie von der Barrierefolie erleichtert.

Gemäß einer weiteren Ausführungsart weist die Abdeckfolie an der zweiten Angriffsstelle eine weniger starke Verbindung zur Barrierefolie als an anderen Bereichen des Randes der Verpackung auf, sodass die Abdeckfolie ausgehend von der zweiten Angriffsstelle leichter als an den übrigen Bereichen des Randes von der Barrierefolie abgezogen werden kann. Hierdurch wird das gezielte Ablösen der Abdeckfolie von der Barrierefolie erleichtert.

Gemäß einer weiteren Ausführungsart ist die erste Angriffsstelle am Rand versetzt zur zweiten Angriffsstelle angeordnet. Hierdurch wird verhindert, dass beim Ablösen der Abdeckfolie von der Barrierefolie versehentlich zugleich die Barrierefolie vom Flachmaterial abgelöst wird.

Gemäß einer weiteren Ausführungsart steht an der ersten Angriffsstelle eine erste Lasche und/oder an der zweiten Angriffsstelle eine zweite Lasche vom Rand der Verpackung vor. Hierdurch das Greifen der Abdeckfolie zum Ablösen von der Barrierefolie und/oder das Greifen der Barrierefolie zum Ablösen von dem Flachmaterial erleichtert.

Die Erfindung wird nachfolgend anhand der anliegenden Zeichnungen eines Ausführungsbeispiels näher erläutert. In den Zeichnungen zeigen:
- Fig. 1A-1C: einen Zuschnitt für eine Schale in der Draufsicht (Fig. 1A), der zu einer Schale aufgerichtete und mit der Beschichtung versehene Zuschnitt in einem Längsschnitt (Fig. 1B) und zusammen mit einer Abdeckfolie in einer Perspektivansicht von oben (Fig. 1C);
- Fig. 2: eine Vorrichtung zum Herstellen der Schale in einem Grobschema.

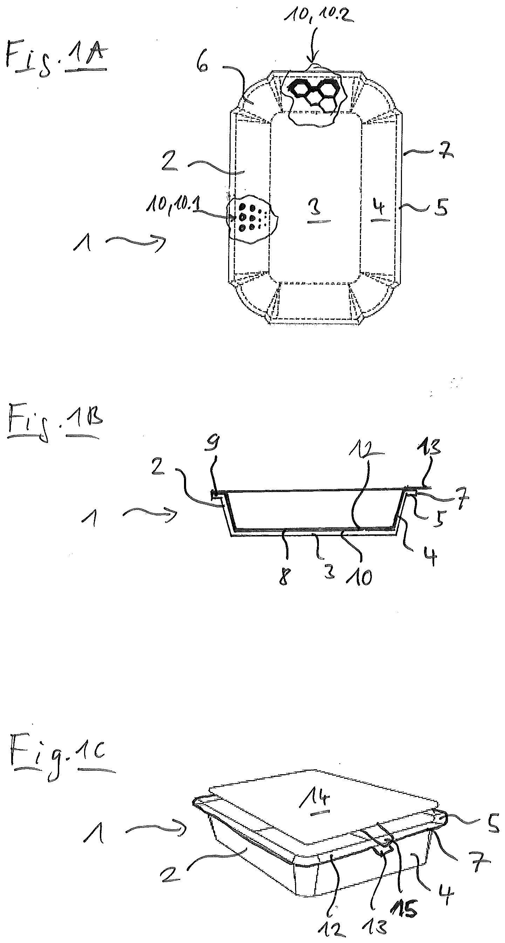

Gemäß Fig. 1 umfasst eine Schale 1 einen Zuschnitt 2 aus einem Karton oder einem anderen Flachmaterial, der einen rechteckigen Boden 3, von den Rändern des Bodens nach oben vorstehende Seitenwände 4 und horizontal nach außen vorstehende Flansche 5 am oberen Rand der Seitenwände 4 aufweist. Die Seitenwände 4 sind an den Ecken durch Laschen 6 miteinander verbunden. Die Flansche 5 stoßen an den Ecken aneinander an oder überlappen einander. Sie haben einen um die Schale 1 umlaufenden äußeren Rand 7.

Der Zuschnitt 2 hat an der Innenseite 8 des Bodens 3 und der Seitenwände 4 sowie an der Oberseite 9 der Flansche 5 eine Beschichtung 10 in Form eines Punktemusters 11.1 oder einer Wabenstruktur 11.2 (jeweils teilweise in Fig. 1A gezeigt). Auf der Innenseite 8 und der Oberseite 9 ist flächig und glatt anliegend eine Barrierefolie 12 auflaminiert. Die Barrierefolie 12 hat einen seitlich vom äußeren Rand 5 nach außen vorstehenden ersten Angreifer 13.

Durch die auflaminierte Barrierefolie 12 kann der Zuschnitt 2 in seiner aufgerichteten Stellung, in der die Seitenwände 4 bezüglich des Bodens 3 nach oben hochstehen und die Flansche 5 horizontal nach außen vorstehen, stabilisiert werden, ohne dass hierfür an den Ecken Laschen 6 oder eine Verklebung der Laschen 6 mit den Seitenwänden 4 oder eine Überlappung zwischen den Flanschen 5 oder eine Verklebung der Flansche 5 miteinander erforderlich ist.

Gemäß Fig. 1C wird die Schale 1 oben mittels einer Abdeckfolie 14 verschlossen. Die Abdeckfolie 14 ist oberhalb der Flansche 5 auf den äußeren Rand der Barrierefolie 12 aufgesiegelt. Die Abdeckfolie 14 weist oberhalb des ersten Angreifers 13 einen nach außen vorstehenden zweiten Angreifer 15 auf. Der erste Angreifer 13 und der zweite Angreifer 15 werden jeweils durch eine Lasche gebildet. Der zweite Angreifer 15 steht etwas weiter nach außen vor, als der erste Angreifer 13, damit er bequem gegriffen werden kann, ohne zugleich den ersten Angreifer 13 zu greifen. Der erste Angreifer 13 und der zweite Angreifer 15 sind nicht miteinander verbunden. Alternativ kann der zweite Angreifer 15 seitlich versetzt zu dem ersten Angreifer 13 angeordnet sein.

Innerhalb der Schale 1 können unter Schutzgas Lebensmittel oder ein anderes Produkt gelagert werden, insbesondere feuchthaltiges Lebensmittel, z.B. Fleisch mit einer Sauce.

Zum Entnehmen des Produktes kann zuerst der zweite Angreifer 15 gegriffen und vom ersten Angreifer 13 hochgeklappt und dann der erste Angreifer 13 festgehalten und die Abdeckfolie 14 von der Barrierefolie abgezogen werden. Nach Entleeren der Schale 1 kann der erste Angreifer 13 gegriffen und die Barrierefolie von dem Zuschnitt 2 abgezogen werden.

Durch die Beschichtung 10 ist die Adhäsionswirkung der Barrierefolie 12 bezüglich des Zuschnittes 2 so verändert, vorzugsweise abgeschwächt, dass die Barrierefolie 12 von dem Zuschnitt 2 leicht durch Ziehen an dem ersten Angreifer 13 abgezogen werden kann. Die Adhäsionswirkung ist jedoch mindestens so groß, dass die Barrierefolie 12 fest mit dem Zuschnitt verbunden bleibt, wenn die Schale 1 den typischen Belastungen beim Befüllen mit Produkt, Transportieren des Produktes und bei der Entnahme des Produktes unterworfen ist.

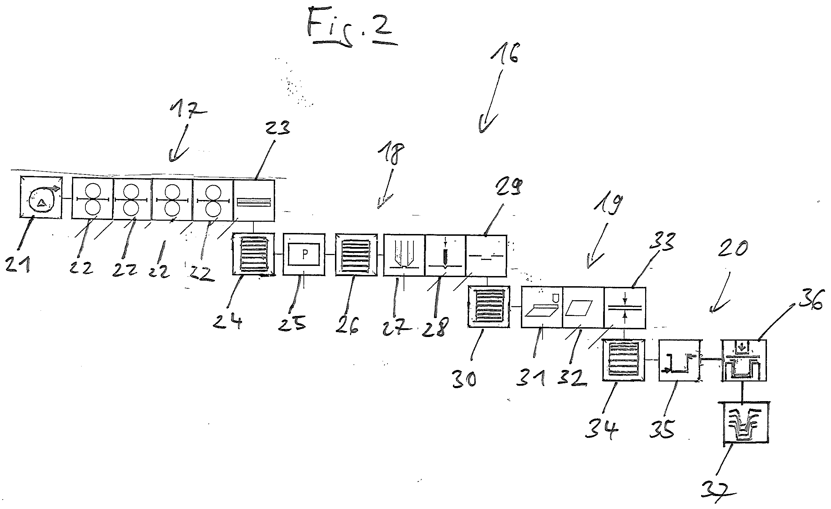

Gemäß Fig. 2 wird zum Herstellen der Schale 1 eine Vorrichtung zum Herstellen 16 verwendet, die eine Vorrichtung zum Drucken 17, eine Vorrichtung zum Bilden von Zuschnitten 18, eine Vorrichtung zum Falten und Kleben 19 und eine Vorrichtung zum Aufrichten und Laminieren 20 umfasst. Am Eingang und am Ausgang der Vorrichtung zum Herstellen 16 sowie zwischen den Vorrichtungen 17, 18, 19, 20 und innerhalb der Vorrichtung 18 sind Lagereinrichtungen zur Lagerung von Ausgangsmaterialien, Zwischenprodukten und Endprodukten vorhanden.

Der Vorrichtung zum Drucken 17 wird der Karton in Bahn- oder Bogenform aus einer ersten Lagereinrichtung 21 (z.B. eine Rollenlagereinrichtung) zugeführt. Die Vorrichtung zum Drucken 17 umfasst mehrere (z.B. vier) Druckwerke 22 für einen Mehrfarbdruck und ein Lackierwerk 23 zum Aufdrucken eines Lackes. Der mit Druckfarbe und Lack bedruckte Karton wird einer zweiten Lagereinrichtung 24 (z.B. einer Stapeleinrichtung) zugeführt.

Aus der zweiten Lagereinrichtung 24 gelangt der Karton in die Vorrichtung zum Bilden von Zuschnitten 18. Diese umfasst eine Station zum Prägen 25, aus der der geprägte Karton in eine dritte Lagereinrichtung 26 gelangt. Aus der dritten Lagereinrichtung 26 gelangt der bedruckte, lackierte und geprägte Karton in eine Vorrichtung zum Stanzen 27, die Zuschnitte 2 ausgestanzt werden. Darauf gelangt der Karton in eine Vorrichtung zum Rillen 28, in der der Karton gerillt wird. Danach gelangt der Karton in eine Ausbrechvorrichtung 29, in der die Zuschnitte 2 aus dem Flachmaterial ausgebrochen werden.

Die ausgebrochenen Zuschnitte 2 gelangen aus der Vorrichtung zum Bilden von Zuschnitten 18 in eine vierte Lagereinrichtung 30. Aus der vierten Lagereinrichtung 30 gelangen die Zuschnitte 2 in die Vorrichtung zum Falten und Kleben 19. Diese umfasst eine Klebstoffauftragsvorrichtung 31, in der Klebelaschen und Klebekanten mit Klebstoff versehen werden. Ferner umfasst die Vorrichtung zum Falten und Kleben 19 eine Faltvorrichtung 32, in der die mit Klebstoff versehenen Laschen oder Kanten mit den damit zu verbindenden Abschnitten des Zuschnittes 2 zusammengefügt werden. Darüber hinaus umfasst die Vorrichtung zum Falten und Kleben 19 eine Pressvorrichtung 33, in der die zusammengefügten Abschnitte der Zuschnitte 2 zusammengepresst und hierdurch fixiert werden.

Die vorgeklebten Zuschnitte 2 werden in einer fünften Lagereinrichtung 34 zwischengelagert. Aus der fünften Lagereinrichtung 34 gelangen die Zuschnitte 2 in eine Aufrichtvorrichtung 35, in der sie von der flachen Form zu einer Schale 1 aufgerichtet werden. Aus der Aufrichtvorrichtung 35 gelangen die aufgerichteten Schalen 1 in eine Kaschierform einer Kaschiervorrichtung 36, in der sie unter Anwendung von Druck und Temperatur mittels eines beheizten Pressstempels mit der Barrierefolie 12 kaschiert werden.

Danach werden die kaschierten Schalen 1 in einer sechsten Lagereinrichtung 37 gelagert, bevor sie mit Produkt befüllt und durch Aufsiegeln einer Abdeckfolie 14 auf den umlaufenden Rand der Barrierefolie 12 geschlossen werden. Zusätzlich kann als mechanischer Schutz noch ein Deckel aus Karton aufgesetzt werden.

## Patentansprüche

1. Verfahren zum Herstellen von Verpackungen aus einem Flachmaterial aus Karton, Pappe, Wellpappe oder Papier und einer Barrierefolie, bei dem das Flachmaterial auf mindestens einer Seite mit einer die Adhäsionswirkung der Barrierefolie beeinflussenden Beschichtung bedruckt, aus dem mit der Beschichtung bedruckten Flachmaterial mindestens ein Zuschnitt zum Bilden einer Verpackung hergestellt und auf die mit der Beschichtung versehene Seite des Flachmaterials die Barrierefolie auflaminiert wird, **dadurch gekennzeichnet, dass** die Beschichtung in Form einer Vielzahl von Rasterpunkten aufgebracht wird.

2. Verfahren nach Anspruch 1, bei dem das Flachmaterial ein bahnförmiges oder ein bogenförmiges Flachmaterial ist.

3. Verfahren nach Anspruch 1 oder 2, bei denen die Beschichtung ein Silikonöl oder ein anderes silikonhaltiges Material, ein Wachs, ein Fett oder ein anderes Trennmittel ist oder umfasst.

4. Verfahren nach einem der Ansprüche 1 bis 3, bei dem die Beschichtung in einem Muster aufgebracht wird, das beschichtete Bereiche und unbeschichtete Bereiche und/oder eine stärkere Adhäsionswirkung der Barrierefolie an dem Flachmaterial bewirkende beschichtete Bereiche und demgegenüber eine schwächere Adhäsionswirkung der Barrierefolie an dem Flachmaterial bewirkende beschichtete Bereiche aufweist.

5. Verfahren nach Anspruch 4, bei dem die eine stärkere Adhäsionswirkung der Barrierefolie bewirkenden Bereiche der Beschichtung aus einem anderen Material bestehen und/oder eine andere Schichtdicke aufweisen als die eine schwächere Adhäsionswirkung der Barrierefolie an dem Flachmaterial bewirkenden Bereiche der Beschichtung.

6. Verfahren nach einem der Ansprüche 1 bis 5, bei dem das Flachmaterial auf mindestens einer Seite mit mindestens einer Druckfarbe und/oder mindestens einem Lack bedruckt wird.

7. Verfahren nach einem der Ansprüche 1 bis 6, bei dem die Beschichtung und/oder die Druckfarbe und/oder der Lack mittels mindestens eines der nachfolgenden Verfahren aufgedruckt wird: Offset-, Flexo-, Tief- oder Siebdruck.

8. Verfahren nach einem der Ansprüche 1 bis 7, bei dem die Barrierefolie mindestens eine Lage aus einem der nachfolgenden Materialien umfasst: PET, PLA, EVOH, PA, PBT, PP, PE.

9. Verfahren nach einem der Ansprüche 1 bis 8, bei dem die Barrierefolie erwärmt und an den Zuschnitt angepresst wird.

10. Verfahren nach einem der Ansprüche 1 bis 9, bei dem der Zuschnitt durch mindestens einen der nachfolgenden Bearbeitungsschritte aus dem Flachmaterial hergestellt wird: Prägen, Ritzen, Rillen, Schneiden, Stanzen.

11. Verfahren nach einem der Ansprüche 1 bis 10, bei dem die Barrierefolie auf den Zuschnitt auflaminiert wird und der mit der Barrierefolie versehene Zuschnitt aufgerichtet und/oder umgeformt wird.

12. Verfahren nach einem der Ansprüche 1 bis 11, bei dem der Zuschnitt aufgerichtet und/oder umgeformt wird und auf den aufgerichteten und/oder umgeformten Zuschnitt die Barrierefolie auflaminiert wird.

13. Verfahren nach einem der Ansprüche 1 bis 11, bei dem gleichzeitig die Barrierefolie auf den Zuschnitt auflaminiert und der Zuschnitt aufgerichtet und/oder umgeformt wird.

14. Verfahren nach einem der Ansprüche 1 bis 13, bei dem die Barrierefolie auf die Innenseite des Zuschnittes auflaminiert wird.

15. Verfahren nach einem der Ansprüche 1 bis 14, bei dem die Verpackung eine Schale, eine Haubenschale, eine Tasse, ein Becher oder ein Teller ist.

16. Verfahren nach einem der Ansprüche 1 bis 15, bei dem die Verpackung mit einer ersten Angriffsstelle an einem Rand hergestellt wird, wobei die Barrierefolie an der ersten Angriffsstelle eine weniger starke Verbindung zum Flachmaterial als an anderen Bereichen des Randes aufweist, sodass die Barrierefolie ausgehend von der ersten Angriffsstelle leichter als von den übrigen Bereichen des Randes von dem Flachmaterial abgezogen werden kann.

17. Verfahren nach Anspruch 16, bei dem die erste Angriffsstelle so hergestellt wird, dass die Barrierefolie an der ersten Angriffsstelle auf beiden Seiten nicht von dem Flachmaterial bedeckt ist und gegriffen werden kann.

18. Verfahren nach an der Ansprüche 1 bis 17, bei dem die Beschichtung so ausgebildet ist, dass die Adhäsionswirkung zwischen Barrierefolie und Flachmaterial mit zunehmendem Abstand von der ersten Angriffsstelle ansteigt oder abfällt.

19. Verfahren nach Anspruch 18, bei dem die Beschichtung so ausgebildet ist, dass die Adhäsionswirkung ausgehend von der ersten Angriffsstelle bis zu einem Boden und/oder zum Zentrum der Verpackung ansteigt oder abfällt.

20. Verfahren nach einem der Ansprüche 1 bis 19, bei dem auf dem umlaufenden Rand der mit der Barrierefolie versehenen Seite der Verpackung eine Abdeckfolie aufgesiegelt oder aufgeklebt wird.

21. Verfahren nach Anspruch 20, bei dem an dem Rand der Verpackung die Adhäsionskraft der Barrierefolie an dem Flachmaterial größer ist als die Adhäsionskraft der Abdeckfolie an der Barrierefolie.

22. Verfahren nach einem der Ansprüche 1 bis 21, bei dem die Abdeckfolie mit einer zweiten Angriffsstelle am Rand der Verpackung hergestellt wird.

23. Verfahren nach Anspruch 22, bei dem die Abdeckfolie an der zweiten Angriffsstelle eine weniger starke Verbindung zur Barrierefolie als an anderen Bereichen des Randes der Verpackung aufweist, sodass die Abdeckfolie ausgehend von der zweiten Angriffsstelle leichter als an den übrigen Bereichen des Randes von der Barrierefolie abgezogen werden kann.

24. Verfahren nach einem der Ansprüche 16 bis 23, bei dem die erste Angriffsstelle am Rand versetzt zur zweiten Angriffsstelle angeordnet ist.

25. Verfahren nach einem der Ansprüche 16 bis 24, bei dem an der ersten Angriffsstelle eine erste Lasche und/oder an der zweiten Angriffsstelle eine zweite Lasche vom Rand der Verpackung vorsteht.

## Claims

1. Method for producing packaging from a flat material made of cardboard, paperboard, corrugated board or paper and a barrier film, in which the flat material is printed on at least one side with a coating influencing the adhesion effect of the barrier film, at least one blank for forming a packaging is produced from the flat material printed with the coating, and the barrier film is laminated onto the side of the flat material provided with the coating, **characterized in that** the coating is applied in the form of a plurality of raster dots.

2. Method according to claim 1, in which the flat material is a web-like or a sheet-like flat material.

3. Method according to claim 1 or 2, in which the coating is or comprises a silicone oil or another silicone-containing material, a wax, a grease or another release agent.

4. Method according to any one of claims 1 to 3, in which the coating is applied in a pattern which has coated regions and uncoated regions and/or coated regions effecting a stronger adhesion effect of the barrier film to the flat material and, in contrast, coated regions effecting a weaker adhesion effect of the barrier film to the flat material.

5. Method according to claim 4, in which the regions of the coating effecting a stronger adhesion effect of the barrier film consist of a different material and/or have a different layer thickness than the regions of the coating effecting a weaker adhesion effect of the barrier film to the flat material.

6. Method according to any one of claims 1 to 5, in which the flat material is printed on at least one side with at least one printing ink and/or at least one varnish.

7. Method according to any one of claims 1 to 6, in which the coating and/or the printing ink and/or the varnish is printed by means of at least one of the following methods: offset, flexographic, gravure or screen printing.

8. Method according to any one of claims 1 to 7, in which the barrier film comprises at least one layer of one of the following materials: PET, PLA, EVOH, PA, PBT, PP, PE.

9. Method according to any one of claims 1 to 8, in which the barrier film is heated and pressed against the blank.

10. Method according to any one of claims 1 to 9, in which the blank is produced from the flat material by at least one of the following processing steps: embossing, scoring, creasing, cutting, punching.

11. Method according to any one of claims 1 to 10, in which the barrier film is laminated onto the blank and the blank provided with the barrier film is erected and/or reshaped.

12. Method according to any one of claims 1 to 11, in which the blank is erected and/or reshaped and the barrier film is laminated onto the erected and/or reshaped blank.

13. Method according to any one of claims 1 to 11, in which simultaneously the barrier film is laminated onto the blank and the blank is erected and/or reshaped.

14. Method according to any one of claims 1 to 13, in which the barrier film is laminated onto the inside of the blank.

15. Method according to any one of claims 1 to 14, in which the packaging is a tray, a hooded tray, a cup, a beaker or a plate.

16. Method according to any one of claims 1 to 15, in which the packaging is produced with a first gripping point at an edge, wherein the barrier film has a less strong connection to the flat material at the first gripping point than at other regions of the edge, so that the barrier film can be peeled off from the flat material more easily starting from the first gripping point than from the remaining regions of the edge.

17. Method according to claim 16, in which the first gripping point is produced such that the barrier film is not covered by the flat material on both sides at the first gripping point and can be gripped.

18. Method according to any one of claims 1 to 17, in which the coating is formed such that the adhesion effect between barrier film and flat material increases or decreases with increasing distance from the first gripping point.

19. Method according to claim 18, in which the coating is formed such that the adhesion effect increases or decreases starting from the first gripping point up to a bottom and/or to the center of the packaging.

20. Method according to any one of claims 1 to 19, in which a cover film is sealed or glued onto the circumferential edge of the side of the packaging provided with the barrier film.

21. Method according to claim 20, in which at the edge of the packaging the adhesive force of the barrier film to the flat material is greater than the adhesive force of the cover film to the barrier film.

22. Method according to any one of claims 1 to 21, in which the cover film is produced with a second gripping point at the edge of the packaging.

23. Method according to claim 22, in which the cover film has a less strong connection to the barrier film at the second gripping point than at other regions of the edge of the packaging, so that the cover film can be peeled off from the barrier film more easily starting from the second gripping point than at the remaining regions of the edge.

24. Method according to any one of claims 16 to 23, in which the first gripping point is arranged on the edge offset from the second gripping point.

25. Method according to any one of claims 16 to 24, in which a first tab projects from the edge of the packaging at the first gripping point and/or a second tab projects from the edge of the packaging at the second gripping point.

## Revendications

1. Procédé de fabrication d'emballages à partir d'un matériau plat de carton, de carton compact, de carton ondulé ou de papier et d'une feuille barrière, dans lequel le matériau plat est imprimé sur au moins un côté avec un revêtement influençant l'adhérence de la feuille barrière, au moins une découpe destinée à former un emballage est fabriquée à partir du matériau plat imprimé avec le revêtement et la feuille barrière est laminée sur le côté du matériau plat pourvu du revêtement, **caractérisé en ce que** le revêtement est appliqué sous la forme d'une multitude de points de trame.

2. Procédé selon la revendication 1, dans lequel le matériau plat est un matériau plat en forme de bande ou en forme de feuille.

3. Procédé selon la revendication 1 ou 2, dans lequel le revêtement est ou comporte une huile de silicone ou un autre matériau contenant du silicone, une cire, une graisse ou un autre agent de séparation.

4. Procédé selon l'une des revendications 1 à 3, dans lequel le revêtement est appliqué selon un motif, lequel présente des régions revêtues et des régions non revêtues et/ou des régions revêtues produisant un effet d'adhérence plus fort de la feuille barrière au matériau plat et des régions revêtues produisant un effet d'adhérence comparativement plus faible de la feuille barrière au matériau plat.

5. Procédé selon la revendication 4, dans lequel les régions du revêtement produisant un effet d'adhérence plus fort de la feuille barrière sont constituées d'un matériau différent et/ou présentent une épaisseur de couche différente par rapport aux régions du revêtement produisant un effet d'adhérence plus faible de la feuille barrière au matériau plat.

6. Procédé selon l'une des revendications 1 à 5, dans lequel le matériau plat est imprimé sur au moins un côté avec au moins une encre d'impression et/ou au moins un vernis.

7. Procédé selon l'une des revendications 1 à 6, dans lequel le revêtement et/ou l'encre d'impression et/ou le vernis sont imprimés au moyen de l'un au moins des procédés suivants : impression offset, flexographie, héliogravure ou sérigraphie.

8. Procédé selon l'une des revendications 1 à 7, dans lequel la feuille barrière comporte au moins une couche constituée de l'un des matériaux suivants : PET, PLA, EVOH, PA, PBT, PP, PE.

9. Procédé selon l'une des revendications 1 à 8, dans lequel la feuille barrière est chauffée et pressée contre la découpe.

10. Procédé selon l'une des revendications 1 à 9, dans lequel la découpe est fabriquée à partir du matériau plat au moyen de l'une au moins des étapes d'usinage suivantes : gaufrage, incision, rainage, découpage, poinçonnage.

11. Procédé selon l'une des revendications 1 à 10, dans lequel la feuille barrière est laminée sur la découpe et la découpe pourvue de la feuille barrière est mise en forme et/ou façonnée.

12. Procédé selon l'une des revendications 1 à 11, dans lequel la découpe est mise en forme et/ou façonnée et la feuille barrière est laminée sur la découpe mise en forme et/ou façonnée.

13. Procédé selon l'une des revendications 1 à 11, dans lequel la feuille barrière est laminée sur la découpe et la découpe est simultanément mise en forme et/ou façonnée.

14. Procédé selon l'une des revendications 1 à 13, dans lequel la feuille barrière est laminée sur le côté intérieur de la découpe.

15. Procédé selon l'une des revendications 1 à 14, dans lequel l'emballage est une barquette, une barquette à couvercle, une tasse, un gobelet ou une assiette.

16. Procédé selon l'une des revendications 1 à 15, dans lequel l'emballage est fabriqué avec une première zone de préhension sur un bord, dans lequel la feuille barrière présente une liaison moins forte avec le matériau plat au niveau de la première zone de préhension qu'au niveau d'autres régions du bord, de sorte que la feuille barrière peut être retirée plus facilement du matériau plat à partir de la première zone de préhension qu'à partir des autres régions du bord.

17. Procédé selon la revendication 16, dans lequel la première zone de préhension est fabriquée de telle façon que la feuille barrière n'est pas recouverte par le matériau plat sur les deux côtés au niveau de la première zone de préhension et peut être saisie.

18. Procédé selon l'une des revendications 1 à 17, dans lequel le revêtement est réalisé de telle façon que l'effet d'adhérence entre la feuille barrière et le matériau plat croît ou diminue à mesure que la distance par rapport à la première zone de préhension augmente.

19. Procédé selon la revendication 18, dans lequel le revêtement est réalisé de telle façon que l'effet d'adhérence croît ou diminue à partir de la première zone de préhension jusqu'à un fond et/ou jusqu'au centre de l'emballage.

20. Procédé selon l'une des revendications 1 à 19, dans lequel une feuille de recouvrement est scellée ou collée sur le bord périphérique du côté de l'emballage pourvu de la feuille barrière.

21. Procédé selon la revendication 20, dans lequel, sur le bord de l'emballage, la force d'adhérence de la feuille barrière au matériau plat est plus élevée que la force d'adhérence de la feuille de recouvrement à la feuille barrière.

22. Procédé selon l'une des revendications 1 à 21, dans lequel la feuille de recouvrement est fabriquée avec une deuxième zone de préhension sur le bord de l'emballage.

23. Procédé selon la revendication 22, dans lequel la feuille de recouvrement présente une liaison moins forte avec la feuille barrière au niveau de la deuxième zone de préhension qu'au niveau d'autres régions du bord de l'emballage, de sorte que la feuille de recouvrement peut être retirée plus facilement de la feuille barrière à partir de la deuxième zone de préhension qu'au niveau des autres régions du bord.

24. Procédé selon l'une des revendications 16 à 23, dans lequel la première zone de préhension est disposée sur le bord de façon décalée par rapport à la deuxième zone de préhension.

25. Procédé selon l'une des revendications 16 à 24, dans lequel une première languette fait saillie au niveau de la première zone de préhension et/ou une deuxième languette fait saillie au niveau de la deuxième zone de préhension à partir du bord de l'emballage.
